# EUROPEAN PATENT APPLICATION

(11) **EP 1 505 390 A1**
(43) Date of publication of application: **09.02.2005**
(21) Application number: 04253629.2
(22) Date of filing: 17.06.2004
(51) Int. Cl.: G01N 33/08, A01K 43/00, A23B 5/005

(54) **Screening apparatus and method**

(30) Priority: 08.07.2003 GB 0315971
(71) Applicant: Deans Foods Limited, Nottinghamshire N22 8TS (GB)
(72) Inventor: Dean, Peter c/o Deans Foods Limited, Newark, Nottinghamshire N22 8TS (GB)
(74) Representative: Williams, Michael Ian

(57) **Abstract**

A method of and apparatus for screening a peeled cooked egg product for egg shell is disclosed. The method comprises the steps of :
(a) illuminating the peeled cooked egg product with ultraviolet light; and
(b) visualising the peeled cooked egg product under ultraviolet illumination in order to detect any light emitted by egg shell. In this way the presence of egg shell in the peeled cooked egg product can be detected.

## Description

The present invention is concerned with the screening of peeled cooked egg products for fragments of egg shell. In particular, the invention is concerned with methods and apparatus for removing fragments of egg shell from peeled cooked egg in a processing line.

Peeled cooked eggs, produced by cooking eggs in their shells and peeling the shells from the cooked eggs, are widely used in the food industry as an ingredient in a range of food products. Some food products, such as meat pies and scotch eggs, include whole peeled cooked eggs. Others, such as sandwiches and salads, include diced or chopped peeled cooked egg, typically mixed with mayonnaise, dressings, and/or seasoning.

In a typical industrial process, a large number of eggs are cooked simultaneously by immersion in a container of boiling water until the eggs are hard or medium hard. Once cooked and then cooled, the eggs are transferred to automatic egg peeling apparatus for de-shelling. Thereafter, the eggs are passed to one or more downstream processing units for processing and packaging.

The use of automatic egg peeling apparatus for de-shelling the cooked eggs undoubtedly accelerates the overall production process. However, it is notoriously difficult to ensure that such apparatus will successfully remove all fragments of shell from the eggs. Small fragments or shards of egg shell generated during the de-shelling process have a tendency to stick to or become embedded in the surface of the cooked egg, and are not readily detected or removed by existing egg peeling apparatus. Whilst the presence of small egg shell fragments in cooked egg products causes no known nor foreseeable harm to consumers, nevertheless the presence of such small fragments in food products is obviously undesirable.

There remains therefore a need for a method and apparatus for screening peeled cooked egg products for fragments of egg shell, such as to detect any egg shell remaining in such products.

According to one aspect of the present invention therefore, there is provided a method for screening a peeled cooked egg product for egg shell, comprising the steps of (a) illuminating said peeled cooked egg product with ultraviolet light; and (b) visualising said peeled cooked egg product under ultraviolet illumination in order to detect any light emitted by egg shell, whereby the presence of egg shell in said peeled cooked egg product can be detected.

According to another aspect of the present invention, there is provided apparatus for carrying out the method of the present invention, comprising a source of ultraviolet light for illuminating a peeled cooked egg product; and one or more light detectors for detecting any light emitted from egg shell in said egg product under ultraviolet illumination; wherein said one or more light detectors are adapted for generating a detectable signal on detection of any such light.

Quite unexpectedly, the present inventors have found that egg shell, when illuminated by ultraviolet light, emits a distinctive reddish glowing light. It is not currently known whether the light emitted by egg shell under UV illumination constitutes reflected ultraviolet rays within a specific wavelength band, or whether this light is generated by the egg shell as a result of absorption of ultraviolet rays. Nevertheless, the emission of such reddish glowing light under UV illumination has proved to be a distinctive characteristic of egg shell. In particular, no such light is emitted by cooked egg white under UV illumination, and hence fragments of egg shell which have adhered to or become embedded in cooked egg have been found to show up clearly against the cooked egg under UV illumination, hence enabling easy detection.

Said egg may be any type of egg produced by an oviparous species. The constituents and composition of egg shells are broadly the same across widely varying oviparous species, and hence all such egg shells are found to behave similarly under UV illumination. Nevertheless, said egg will typically be an egg suited for human consumption, such as a bird's egg, such as a hen, duck, quail, bantam, goose, turkey or ostrich egg.

Said peeled cooked egg product may comprise whole peeled cooked egg, or processed peeled cooked egg, such as chopped, sliced, diced, mashed or homogenised peeled cooked egg. Said peeled cooked egg product may optionally comprise additional ingredients, such as mayonnaise, flavourings or seasonings.

Said ultraviolet light may have a wavelength anywhere in the near, far or extreme ultraviolet spectrum. Thus, said ultraviolet light may have a wavelength above 4nm. Said ultraviolet light may have a wavelength below 400nm. More particularly, said ultraviolet light may have a wavelength of at least 10nm, or at least 50nm, or at least 100nm, or at least 280nm. Said ultraviolet light may have a wavelength in the range of about 4nm to about 280nm (UVC), or a wavelength in the range of about 280nm to about 320nm (UVB), or a wavelength in the range of about 320nm to about 400nm (UVA). Sources of ultraviolet light, such as UV bulbs, are well known and are widely available.

Preferably, said peeled cooked egg product may be illuminated and visualised from all sides. This will ensure that any fragments of egg shell which may have adhered to or become embedded in any surface of said cooked egg product can be detected. Thus, said peeled cooked egg product may be rotated relative to said ultraviolet light source and said one or more light detectors. Alternatively or in addition, said ultraviolet light source and said one or more light detectors may be caused to orbit around said peeled cooked egg.

Optionally, said peeled cooked egg product may be visualised under said ultraviolet light by a human operative who is trained to recognise the emission of light from egg shell under UV illumination. Preferably, however, said peeled cooked egg product may be visualised under said ultraviolet light by one or more light detectors which are capable of automatically detecting any light emitted from egg shell under UV illumination, and which are arranged to generate a detectable signal on detection of any such light. Said one or more light detectors may, for example, comprise one or more cameras, particularly digital cameras, and means for processing and/or analysing the images recorded by said one or more cameras.

Said detectable signal may be a visible or audible signal intended for detection by a human operative. Alternatively, or in addition, said detectable signal may be arranged to be transmitted to processing means, which processing means are capable of detecting said signal and altering the upstream or downstream processing of said cooked egg product in response to said signal. Thus, said processing means may for example be capable of removing or discarding said cooked egg product, and/or altering the operation of the automatic peeling apparatus which has de-shelled said cocked egg product.

In a further particularly preferred aspect of the invention, there is provided a method for removing egg shell from a processing line for a peeled cooked egg product, said method comprising the steps of dividing or separating peeled cooked egg product on said processing line into discrete batches; screening each batch for egg shell in accordance with the method of the present invention; and separating from said processing line any batch of egg product in which egg shell is detected.

As will be appreciated, this method should ensure that any batch of egg product which remains on the processing line for downstream processing is free from egg shell. According to this method, any batch of cooked egg product in which egg shell is detected is separated from the processing line. Batches of egg product which are separated from the processing line may be discarded, or may be picked over to remove all remaining traces of egg shell before being returned to the processing line.

Each of said discrete batches of peeled cooked egg product may comprise one or more whole peeled cooked eggs; or may comprise a selected weight or volume of chopped, sliced, diced, mashed or homogenised peeled cooked egg. Each batch may optionally include additional ingredients such as mayonnaise and/or seasonings.

Preferably, said batches of egg product on the processing line may be screened successively, one by one. However, as an alternative, several batches of egg product on said processing line may be screened simultaneously.

According to yet a further aspect of the present invention, there is provided apparatus for removing egg shell from an egg product processing line in accordance with the aforementioned method, said apparatus comprising a source of ultraviolet light for illuminating one or more batches of egg product on said processing line; one or more light detectors for detecting any light emitted from egg shell in each batch under illumination, whereby the presence of any egg shell can be detected; and means for automatically separating from said processing line any batch of egg product in which egg shell is detected; wherein said one or more light detectors are operatively connected to said automatic separating means and are arranged to transmit a signal to said automatic separating means on detection of egg shell in a batch, which signal triggers said automatic separating means to separate said batch from the processing line.

Said automatic separating means may comprise means for picking a batch of egg product from said processing line, or means for diverting a batch of egg product from said processing line, or means for blocking a batch of egg product from proceeding along said processing line.

It will be appreciated that said apparatus may readily be added on to an existing processing line for a peeled cooked egg product, at any stage following the peeling and preceding the packaging of said egg product.

Following is a description, by way of example only, of embodiments of the invention and modes for putting the invention into effect.

In the drawings :
Figure 1 shows a flow diagram illustrating a known processing line for a peeled cooked egg product.
Figure 2 shows a flow diagram illustrating use of the screening method of the present invention.
Figure 3 illustrates apparatus for removing egg shell from a processing line in accordance with the present invention.

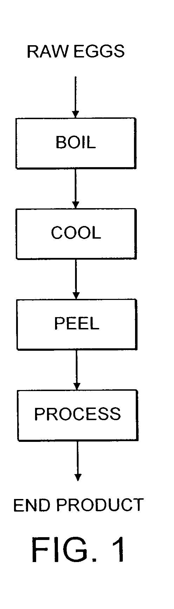

A typical processing line for a peeled cooked egg product is illustrated in Figure 1. As seen in this Figure, raw eggs are boiled in their shells until hard or medium-hard, and are then peeled. The peeled cooked eggs are then dispatched to downstream processing means, which may for example include means for chopping, slicing, dicing, mashing or homogenising the peeled cooked eggs, and/or means for mixing the peeled cooked eggs with other ingredients such as mayonnaise, seasoning, or sausage meat, and/or means for packaging the peeled cooked eggs.

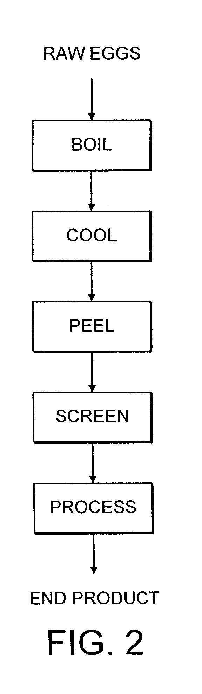

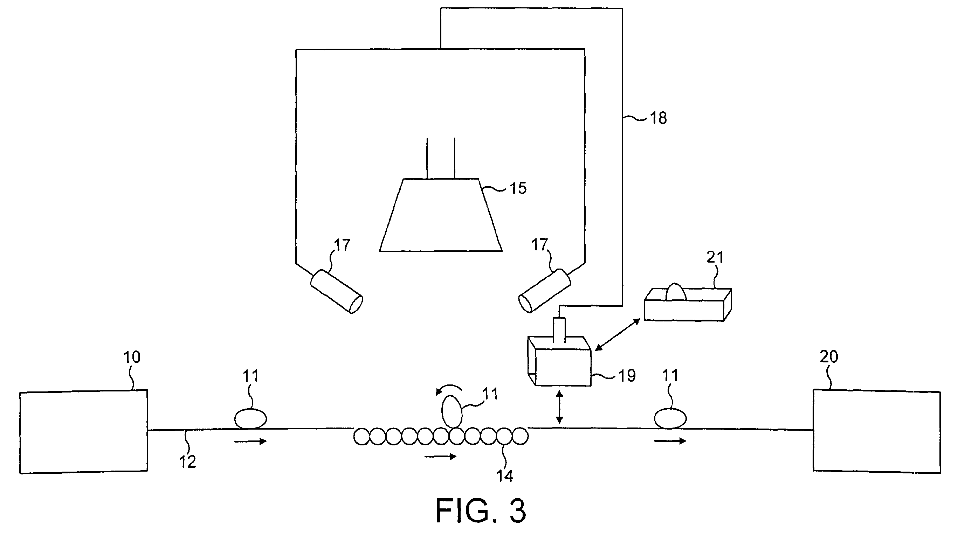

This known processing line may be readily modified in accordance with the present invention, as illustrated in Figures 2 and 3. Following peeling by a peeling device 10, cooked eggs 11 are dispatched one by one along a conveyor belt 12 towards downstream processing means 20. As the eggs travel along the conveyor belt 12, they travel over rollers 14 which cause the eggs to roll over at least once, and preferably more than once. An ultraviolet light source 15 is provided juxtaposed the rollers 14, and is adapted to illuminate each egg 11 as it rolls over the rollers 14.

Cameras 17 are located adjacent the ultraviolet light source 15. The cameras 17 are positioned such that as an egg 11 rolls over the rollers 14, the entire surface of the egg 11 is visualised under ultraviolet illumination by one or both of the cameras 17.

The cameras 17 are adapted to record digital images of the egg 11, and are connected to digital processing means (not shown) for analysing the images, in order to detect any light emitted from egg shell under UV illumination. The digital processing means are programmed such that when light emitted from egg shell under UV illumination is detected, an activating signal is sent to a downstream deflector 18, which is capable of deflecting an egg from the processing line.

In the embodiment shown in Figure 3, the downstream deflector 18 comprises a movable transporter 19 which is adapted to hold at least one egg, the transporter 19 being movable between the conveyor belt 12 and a storage location 21. The downstream deflector 18 is arranged such that on receipt of an activating signal from the digital processing means, the transporter 19 is caused to move into line with the conveyor belt 12 immediately downstream of the rollers 14, such that the next egg travelling off the rollers will enter the transporter 19 instead of travelling further down the conveyor belt 12. Once the egg has entered the transporter 19, the transporter 19 is caused to transport the egg to said storage location 21 and to deposit the egg at said storage location 21.

The cameras 17, the digital processing means and the downstream deflector 18 are arranged such that on detection of egg shell in or on an egg travelling over said rollers 14, that egg is deflected from the processing line and is transported to said storage location 21.

Said storage location 21 may comprise a waste location, and in this case every egg deflected from the processing line will be discarded. Alternatively, eggs transported to said storage location 21 may be picked over, in order to remove any fragments of egg shell in or on said eggs, and may then be returned to said processing line, either upstream or downstream of the rollers 14.

The power of the ultraviolet light source 15 and the sensitivity of the cameras 17 is preferably such that fragments of egg shell embedded up to 10mm, or up to 5mm, or up to 3-4mm, or up to 1-2mm, below the surface of the cooked egg may be detected.

## Claims

1. A method for screening a peeled cooked egg product for egg shell, comprising the steps of :
(a) illuminating said peeled cooked egg product with ultraviolet light; and
(b) visualising said peeled cooked egg product under ultraviolet illumination in order to detect any light emitted by egg shell, whereby the presence of egg shell in said peeled cooked egg product can be detected.

2. A method as claimed in claim 1, wherein said peeled cooked egg product comprises whole peeled cooked egg, or processed peeled cooked egg, such as chopped, sliced, diced, mashed or homogenised peeled cooked egg.

3. A method as claimed in claim 1 or claim 2, wherein said ultraviolet light has a wavelength of at least 4nm and/or no more than 400nm.

4. A method as claimed in any of claims 1-3, wherein said peeled cooked egg product is illuminated and visualised from all sides.

5. A method as claimed in any preceding claim, wherein said peeled cooked egg product is visualised under said ultraviolet light by one or more light detectors which are capable of automatically detecting any light emitted from egg shell under UV illumination, and which are arranged to generate a detectable signal on detection of any such light.

6. A method as claimed in claim 5, wherein said detectable signal is arranged to be transmitted to processing means, which processing means are capable of detecting said signal and altering the upstream or downstream processing of said cooked egg product in response to said signal.

7. Apparatus for carrying out a method as claimed in any preceding claim, comprising a source of ultraviolet light for illuminating a peeled cooked egg product; and one or more light detectors for detecting any light emitted from egg shell in said egg product under ultraviolet illumination; wherein said one or more light detectors are adapted for generating a detectable signal on detection of any such light.

8. Apparatus as claimed in claim 7, wherein said one or more light detectors comprise cameras and means for processing and/or analysing images recorded by said cameras.

9. A method for removing egg shell from a processing line for a peeled cooked egg product, said method comprising the steps of dividing or separating peeled cooked egg product on said processing line into discrete batches; screening each batch for egg shell in accordance with the method of any of claims 1-6; and separating from said processing line any batch of egg product in which egg shell is detected.

10. A method as claimed in claim 9, wherein each of said discrete batches of peeled cooked egg product comprises one or more whole peeled cooked eggs, or a selected weight or volume of chopped, sliced, diced, mashed or homogenised peeled cooked egg.

11. A method as claimed in claim 9 or claim 10, wherein said batches of egg product on the processing line are screened successively, one by one.

12. Apparatus for removing egg shell from an egg product processing line in accordance with the method of any of claims 9-11, said apparatus comprising a source of ultraviolet light for illuminating one or more batches of egg product on said processing line; one or more light detectors for detecting any light emitted from egg shell in each batch under illumination, whereby the presence of any egg shell can be detected; and means for automatically separating from said processing line any batch of egg product in which egg shell is detected; wherein said one or more light detectors are operatively connected to said automatic separating means and are arranged to transmit a signal to said automatic separating means on detection of egg shell in a batch, which signal triggers said automatic separating means to separate said batch from the processing line.

13. Apparatus as claimed in claim 12, wherein said automatic separating means comprises means for picking a batch of egg product from said processing line, or means for diverting a batch of egg product from said processing line, or means for blocking a batch of egg product from proceeding along said processing line.
